# EUROPEAN PATENT SPECIFICATION

(11) **EP 1 065 098 B1**
(45) Date of publication and mention of the grant of the patent: **06.09.2006**
(21) Application number: 00660115.7
(22) Date of filing: 20.06.2000
(51) Int. Cl.: B60P 1/00, B62D 33/04

(54) **Arrangement in cargo space**
Anordnung im Frachtraum
Agencement dans un espace de chargement

(30) Priority: 28.06.1999 FI 991468
(43) Date of publication of application: 03.01.2001
(73) Proprietor: A/S Bevola, 4100 Ringsted (DK)
(72) Inventor: Nybacka, Johan, 67600 Karleby (FI)
(74) Representative: Niemi, Hakan Henrik

(56) References cited:
- EP-A- 0 805 098
- DE-A- 4 412 067
- DE-U- 29 611 792
- US-A- 3 891 102

## Description

### TECHNICAL FIELD

The invention relates to an arrangement in a cargo space according to the preamble of claim 1, for forming at least one loading area above a platform body in a cargo space for use in the transport of mixed cargo, known for instance from SE-506 374 corresponding to EP-A-805098.

### BACKGROUND OF THE INVENTION

In the transport of different types of mixed cargo, particularly goods arranged in pallets, the effective use of available cargo space is of utmost importance. To make the use of the cargo space as versatile as possible, different systems have been developed for temporary loading areas, which can be arranged above the actual platform body in the cargo space. Such solutions are disclosed for example in GB 2 274 627, US 3,891,102, DE 44 12 067 and an elaboration thereof, i.e. EP 0 698 545, and lastly, SE 506 374. In this connection, it is known to provide a cargo space with substantially vertical supports comprising means for receiving beams arranged across the cargo space substantially parallel to the platform body. These beams are usually vertically movable in the cargo space along the supports and attachable with carrying shanks or other means to the support at a suitable height for receiving loads. Such a beam operates thus even as such as a cargo platform for a pallet, for example, but the beam can also be provided with a special loading plane for receiving mixed cargo that is not arranged in pallets.

Even though these known solutions provide an additional loading area above the platform body of the cargo space, from and to which loading can be carried out, none of the known solutions allow the long side of a vehicle to be entirely opened for rapid discharge of the load from the upper loading plane and immediately thereafter from the platform body. The known solutions do not either allow long cargo to be loaded and unloaded from the long side of the vehicle.

A common problem in the existing solutions is, however, that the storage of the beams significantly decreases available cargo space. In particular, storing the beams folded against the long sides of the cargo space according to publications US 3,891,102, DE 44 12 067 or EP 0 698 545 notably prevents the utilization of the entire cargo space. On the other hand, if the beams are lifted up against the ceiling of the cargo space, according to for example SE 506 374, the beams are difficult to handle, particularly in present high cargo spaces.

### OBJECT OF THE INVENTION

The present invention avoids the problems of known solutions. It is an object of the present invention to provide a cargo space with an additional loading plane, which is easy to use, dependable in service and easy to implement, and simultaneously to provide the cargo space with maximum loading capacity.

These objects are solved by the characteristics of the invention as specified in the attached claims. The invention is particularly characterized in what is specified in the characterizing part of claim 1.

The arrangement of the present invention provides a plurality of important advantages over the prior art. Consequently, the cargo to be transported in the cargo space can be rapidly arranged on two different planes. The use of transverse beams, according to the invention, which can be simply and rapidly installed in the cargo space individually according to the height of the pallets, enables optimal utilization of the cargo space. The transverse beams according to the invention are easily detachable from their storage position and can be easily moved up to their storage position in the ceiling of the cargo space.

The arrangement of the present invention requires no special structural parts to be stored elsewhere; all carrier structures and support structures that are required for utilizing the loading area are arranged in the transverse beam of the invention.

A transverse beam of the invention can be utilized as such for receiving pallets, but the transverse beams can also be provided with loading areas for transporting mixed cargo having different sizes. The invention is also applicable to transporting what is known as long cargo, which can easily be moved to and from the cargo space through a completely opened long side.

### DESCRIPTION OF THE DRAWING FIGURES

The invention will be described in greater detail below by means of a preferred exemplary embodiment with reference to the attached drawings, in which
Figure 1 shows a cargo space with transverse beams according to the present invention,
Figures 2a to 2d show the operation of a transverse beam according to the present invention,
Figure 3 shows the arrangement of the transverse beam in the ceiling of the cargo space and an alternative structure for its telescopic function,
Figure 4 shows an arrangement of the transverse beam in a support in the long side of the cargo space, and
Figure 5 is a cross-section of a preferred transverse beam of the present invention.

### DESCRIPTION OF EXEMPLARY EMBODIMENTS

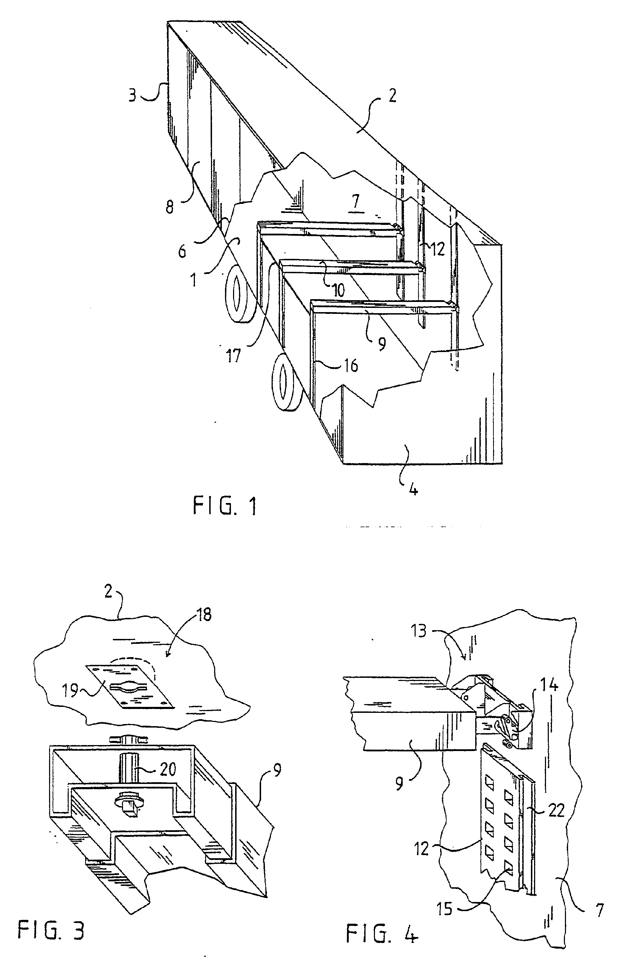

A transport space in a transport vehicle is defined according to Figure 1 by a platform body 1, a ceiling 2, a front end 3, a rear end 4 and substantially parallel long sides 6 and 7. Usually at least one of the long sides 6 is completely openable so as to facilitate the loading and unloading of cargo. To be able to be opened, the long side is preferably provided with folding doors 8 along its entire length, the doors being movable towards the front and rear ends of the cargo space for releasing the entire long side for loading and unloading.

To be able to better utilize the capacity of such a cargo space, it is provided with transverse beams 9, which form at least one additional loading area 10 above the platform body 1. Figures 3, 4 and 5 show a preferable embodiment of such transverse beams, and the invention will be described herein in greater detail with reference to the preferred embodiment shown in the figures. The structural parts of the invention are denoted with reference numbers, like numbers being used in the figures.

According to the present invention, an arrangement in the cargo space of a transport vehicle thus comprises a transverse beam 9, which can be lifted and lowered in relation to the platform body 1. Such a transverse beam is telescopically extendable for example according to Figures 2c and 3 so as to provide a uniform support structure, which extends between both substantially parallel long sides 6 and 7, and to be able to be lifted up towards the ceiling of the cargo space beside a supporting structure 11 in the doors 8. In this case the transverse beams are movably arranged to supports 12 provided in one long side 7 of the cargo space facing the side doors. One end of the transverse beam is arranged in the support with connection means 13, allowing it to be locked to the support at an optional height by means of locking tongues 14 provided in the transverse beam and acting together with openings 15 in the support in a manner known per se. The end of the transverse beam facing the support can also be designed telescopically extendable, whereby the connection means is preferably arranged movably in relation to the body of the transverse beam.

The second end of the transverse beam is provided with a leg 16 arranged against the platform body for freeing the side doors so as to allow them to be completely opened even though the transverse beams are lowered down. To prevent the transverse beam from moving in the longitudinal direction of the cargo space, it is preferably also fastened to an adjacent structure, for example the end 3 of the cargo space or an adjacent transverse beam, by means of a cross bar 17.

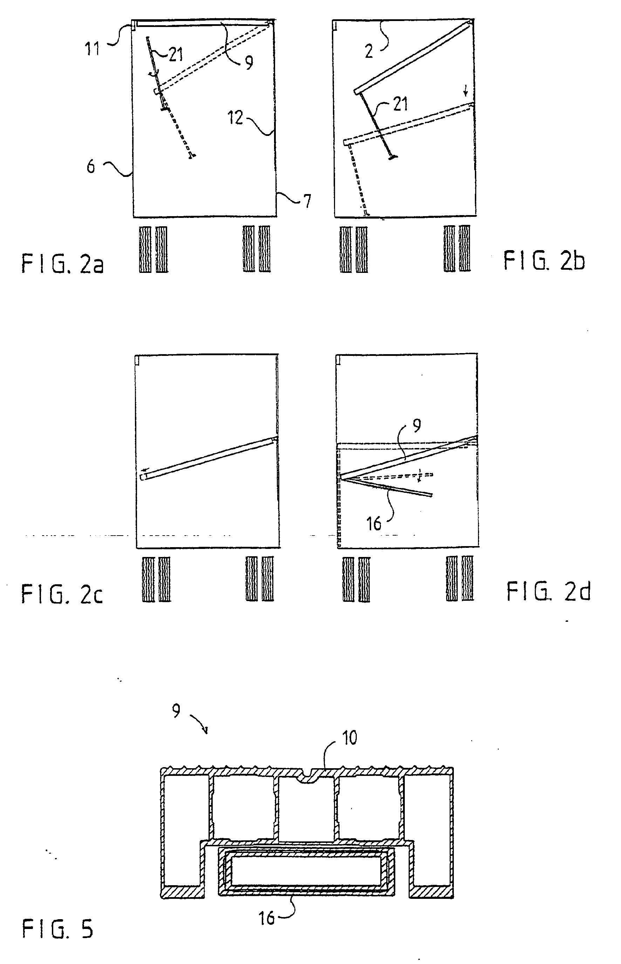

In a preferred embodiment of the transverse beam 9, the leg 16 and the cross bar 17 are both arranged turnable in the transverse beam, whereby the leg is also telescopically extendable. In accordance with Figure 5, at least the leg is arranged insertable into the transverse beam, so that it does not take up any additional space in the transport position of the transverse beam.

An arrangement according to the present invention operates according to Figures 2a to 2d in the following manner. According to Figure 2a, the transverse beam is fastened in its transport position (the ceiling 2 of the cargo space) at its one end in the support 12 with the locking tongues 14, as was described above, and at its second end with a gripping means 18. The shape of the gripping means is for example a shape known per se, and it comprises a receiving means 19 in the ceiling and a locking means 20 projecting from the transverse beam, whereby the locking means can be locked or released from the locked position by a swinging movement with a simple locking rod 21. The locking rod is arranged in the locking means and the transverse beam is released, whereupon one end of the transverse beam is lowered towards the platform body 1 of the cargo space. The locking tongues of the transverse beam are then released from the support, preferably by an action on a spring means arranged in the transverse beam. Now both ends of the transverse beam are released, and it can therefore be lowered towards the platform body, whereby the connection means 13 at one end of the transverse beam is still arranged to move in grooves 22 provided in the support.

When the transverse beam 9 has been lowered to a suitable height, its spring means is again released, causing the locking tongues 14 to penetrate in the openings 15 of the support 12. The leg 16, arranged pivotally on the lower side of the transverse beam, can then be released and unfolded in a position substantially perpendicular to the transverse beam. When required, the leg is simultaneously telescopically extended until the upper surface of the transverse beam, i.e. the loading area 10, is in a substantially horizontal position. The length of the leg is determined, whereupon the cross bar 17, arranged pivotally to the transverse beam, is released and arranged in an end 3 adjacent to the transverse beam or in a second transverse beam adjacent to the transverse beam, for preventing the transverse beam from turning in the longitudinal direction of the cargo space.

For effective utilization of the cargo space, it preferably comprises transverse beams 9 along its entire length. Accordingly, an optional number of transverse beams can be taken into use to facilitate and improve the transport of goods. It is, however, preferable to first take into use the transverse beams nearest to the front end 3 of the cargo space. This way the transverse beams, lowered from the ceiling 2 of the cargo space to form the loading area 10, can be bound together with the cross bars 17. It is also feasible to arrange the transverse beams according to the present invention for example in pairs on different heights for receiving different-sized cargo in the cargo space.

When transported goods are unloaded, the transverse beams 9 according to the invention are taken out of use in a reverse order, i.e. the transverse beam closest to the rear end 4 of the cargo space is lifted first to its storage position in the ceiling 2 of the cargo space.

Transverse beams 9 according to the present invention are very simple to use. The beam can be rapidly released and lowered to its right height, since all structural parts required for the utilization of the transverse beam are arranged therein. The transverse beams do not either present any obstacle to loading or unloading goods. Because the transverse beams are supported only by the legs 16 and the cross bars 17 at the openable long side 3, the upper loading area is available for any usual loading and unloading arrangement. During loading and unloading of usual platform bodies in the cargo space, the transverse beams can be rapidly removed.

## Claims

1. An arrangement in a cargo space comprising a platform body (1), a ceiling (2), ends (3, 4) and substantially parallel long sides (6, 7), one of the long sides (6) being arranged openable along its effective length and the other one is a fixed long side (7), the arrangement comprising a vertically movable transverse beam (9) for forming a loading area (10), which is parallel to the platform body, the transverse beam being vertically movable in the cargo space from a storage position in the substantial vicinity of the ceiling (2) to a position above the platform body (1),
**characterized in that**
one end of the transverse beam (9) is movably arranged in a substantially vertical support (12) provided in said fixed long side (7) of the cargo space,
the end of the transverse beam (9) facing the support (12) comprising at least one locking tongue (14) for fastening the transverse beam at an optional height to the support, and
substantially its end opposite to the support (12) comprising gripping means (18) for fastening the transverse beam to the ceiling (2) of the cargo space, whereby
that end of the transverse beam (9), which is opposite to the support (12), comprises a leg (16) arranged turnable in the transverse beam, to be arranged against the platform body (1), and
substantially the end of the transverse beam (9), opposite to the support (12), comprising a cross bar (17) arranged turnable in the transverse beam.

2. An arrangement in a cargo space as claimed in claim 1, **characterized in that** the transverse beam (9) is telescopically extendable.

3. An arrangement in a cargo space as claimed in claim 1, **characterized in that** the leg (16) is telescopically extendable.

4. An arrangement in a cargo space as claimed in claim 1 or 2, **characterized in that** the transverse beam (9) comprises a locking means (20) projecting there from, and the ceiling (2) comprises a receiving means (19) for said locking means so as to form said gripping means (18) for fastening the transverse beam substantially immovably to the ceiling (2) of the cargo space.

5. An arrangement as claimed in any one of the preceding claims, **characterized in that** the leg (16) is arranged to be retractable into the transverse beam (9).

6. An arrangement as claimed in any one of the preceding claims, **characterized in that** the cross bar (17) is arranged to be retractable into the transverse beam (9).

## Patentansprüche

1. Anordnung in einem Frachtraum, umfassend einen Plattfomlkörper (1), eine Decke (2), Enden (3, 4) und im Wesentlichen parallele Längsseiten (6, 7), wobei eine der Längsseiten (6) so angeordnet ist, dass sie sich entlang ihrer wirkungsvollen Länge öffnen lässt, und die andere eine festangeordnete Längsseite (7) ist, wobei die Anordnung einen vertikal bewegbaren Querbalken (9) umfasst, um einen Ladebereich (10) zu bilden, der zum Plattformkörper parallel ist, wobei der Querbalken von einer Lagerungsposition im Wesentlichen in der Nähe der Decke (2) zu einer Position über dem Plattformkörper (1) im Frachtraum vertikal bewegbar ist, **dadurch gekennzeichnet, dass**
ein Ende des Querbalkens (9) in einem im Wesentlichen vertikalen Träger (12) bewegbar angeordnet ist, der in der festangeordneten Längsseite (7) des Frachtraums vorgesehen ist,
wobei das dem Träger (12) zugewandte Ende des Querbalkens (9) mindestens eine Arretierzunge (14) umfasst, um den Querbalken in einer fakultativen Höhe am Träger zu befestigen, und
wobei im Wesentlichen sein zum Träger (12) entgegengesetztes Ende Greifeinrichtungen (18) umfasst, um den Querbalken an der Decke (2) des Frachtraums zu befestigen, wobei
dasjenige Ende des Querbalkens (9), das zum Träger (12) entgegengesetzt ist, einen Schenkel (16) umfasst, der so angeordnet ist, dass er sich in den Querbalken drehen lässt, um gegen den Plattformkörper (1) angeordnet zu werden, und
wobei im Wesentlichen das zum Träger (12) entgegengesetzte Ende des Querbalkens (9) eine Querstange (17) umfasst, die so angeordnet ist, dass sie sich in den Querbalken drehen lässt.

2. Anordnung in einem Frachtraum nach Anspruch 1, **dadurch gekennzeichnet, dass** der Querbalken (9) teleskopisch ausziehbar ist.

3. Anordnung in einem Frachtraum nach Anspruch 1, **dadurch gekennzeichnet, dass** der Schenkel (16) teleskopisch ausziehbar ist.

4. Anordnung in einem Frachtraum nach Anspruch 1 oder 2, **dadurch gekennzeichnet, dass** der Querbalken (9) eine Arretiereinrichtung (20) umfasst, die davon vorsteht, und die Decke (2) eine Aufnahmeeinrichtung (19) für die Arretiereinrichtung umfasst, um die Greifeinrichtung zu bilden, um den Querbalken im Wesentlichen unbeweglich an der Decke (2) des Frachtraums zu befestigen.

5. Anordnung nach einem der vorangehenden Ansprüche, **dadurch gekennzeichnet, dass** der Schenkel (16) so angeordnet ist, dass er in den Querbalken (9) zurückziehbar ist.

6. Anordnung nach einem der vorangehenden Ansprüche, **dadurch gekennzeichnet, dass** die Querstange (17) so angeordnet ist, dass sie in den Querbalken (9) zurückziehbar ist.

## Revendications

1. Agencement dans un espace de chargement comprenant un corps de plate-forme (1), un plafond (2), des extrémités (3, 4) et des côtés longs substantiellement parallèles (6, 7), un des côtés longs (6) pouvant être ouvert le long de sa longueur effective, l'autre étant un côté long fixe (7), l'agencement comprenant une poutre transversale mobile verticalement (9) pour former une aire de chargement (10), qui est parallèle au corps de plate-forme, la poutre transversale étant mobile verticalement dans l'espace de chargement d'une position de stockage au voisinage substantiel du plafond (2) à une position située au-dessus du corps de plate-forme (1), **caractérisé en ce que** :
une extrémité de la poutre transversale (9) est placée de façon mobile dans un support substantiellement vertical (12) prévu dans ledit côté long fixe (7) de l'espace de chargement,
l'extrémité de la poutre transversale (9) faisant face au support (12) comprenant au moins une languette de blocage (14) pour attacher la poutre transversale à une hauteur optionnelle sur le support, et
son extrémité substantiellement opposée au support (12) comprenant un moyen de préhension (18) pour fixer la poutre transversale au plafond (2) de l'espace de chargement, grâce à quoi
l'extrémité de la poutre transversale (9) qui est opposée au support (12) comprend une jambe (16) pouvant tourner dans la poutre transversale, à placer contre le corps de plate-forme (1), et
l'extrémité de la poutre transversale (9) substantiellement opposée au support (12) comprenant une barre transversale (17) pouvant tourner dans la poutre transversale.

2. Agencement dans un espace de chargement selon la revendication 1, **caractérisé en ce que** la poutre transversale (9) est extensible de manière télescopique.

3. Agencement dans un espace de chargement selon la revendication 1, **caractérisé en ce que** la jambe (16) est extensible de manière télescopique.

4. Agencement dans un espace de chargement selon la revendication 1 ou 2, **caractérisé en ce que** la poutre transversale (9) comprend un moyen de blocage (20) faisant saillie depuis celle-ci, et le plafond (2) comprend un moyen récepteur (19) pour ledit moyen de blocage afin de former ledit moyen de préhension pour fixer la poutre transversale de façon substantiellement immobile au plafond (2) de l'espace de chargement.

5. Agencement dans un espace de chargement selon l'une quelconque des revendications précédentes, **caractérisé en ce que** la jambe (16) est adaptée pour être rétractable dans la poutre transversale (9).

6. Agencement dans un espace de chargement selon l'une quelconque des revendications précédentes, **caractérisé en ce que** la barre transversale (17) est adaptée pour être rétractable dans la poutre transversale (9).
